# EUROPÄISCHE PATENTSCHRIFT

(11) **EP 2 951 433 B1**
(45) Veröffentlichungstag und Bekanntmachung des Hinweises auf die Patenterteilung: **05.12.2018**
(21) Anmeldenummer: 14718003.8
(22) Anmeldetag: 31.01.2014
(51) Int. Cl.: F03D 7/02

(54) **STEUERVORRICHTUNG FÜR EIN GIERSYSTEM EINER WINDKRAFTANLAGE**
CONTROL DEVICE FOR A YAW SYSTEM OF A WIND POWER PLANT
DISPOSITIF DE COMMANDE POUR UN SYSTÈME DE LACET D'ÉOLIENNE

(30) Priorität: 01.02.2013 DE 102013101010
(43) Veröffentlichungstag der Anmeldung: 09.12.2015
(73) Patentinhaber: 2-B Energy Holding B.V., 7556 PE Hengelo (NL)
(72) Erfinder: JAKOBSSON, Johan Mikael, Grants Pass, Oregon 97527 (US); PEELS, Huibertus, NL-7631 HS Ootmarsum (NL); ELSCHEN, Frank, 48429 Rheine (DE)
(74) Vertreter: Bossmeyer, Jörg Peter
(86) Internationale Anmeldenummer: PCT/EP2014/051909
(87) Internationale Veröffentlichungsnummer: WO 2014/118322

(56) Entgegenhaltungen:
- WO-A1-01/86141
- WO-A1-2011/057664
- DE-T2- 69 703 622
- JP-A- 2004 232 500
- ENGSTROEM S: "SOFT YAW DRIVES FOR WIND TURBINES", DEWI MAGAZIN, DEUTSCHES WINDENERGIE INSTITUT, WILHELMSHAVEN, DE, Nr. 18, 1. Februar 2001 (2001-02-01), Seiten 72-75, XP001082049, ISSN: 0946-1787

## Beschreibung

Die Erfindung betrifft eine Steuervorrichtung für ein Giersystem einer Windkraftanlage, mit wenigstens einer zwischen eine Tragstruktur und einen an der Tragsstruktur um eine Gierachse drehbar gelagerten Maschinenträger geschalteten und wenigstens einen Elektromotor umfassenden Stelleinrichtung und wenigstens einem Dämpfungsglied, mittels welchem oder mit Hilfe dessen in einem mit dem Elektromotor verbundenen Zustand eine Drehbewegung des Maschinenträgers relativ zu der Tragstruktur um die Gierachse dämpfbar ist.

Die WO 01/86141 A1 offenbart eine Windenergieanlage mit einem Maschinenhaus, das einen Rotor mit wenigstens einem Rotorblatt aufnimmt und einer Verstelleinrichtung zur Verstellung des Maschinenhauses zur gewünschten Ausrichtung des Rotors in Richtung des Windes, wobei die Verstelleinrichtung als Antrieb einen Drehstrom-Asynchronmotor aufweist, der für eine Verstellung des Maschinenhauses mit einem Drehstrom variabler Frequenz beaufschlagt wird und während der Stillstandszeit des Maschinenhauses mit Gleichstrom versorgt wird.

Die WO 2011/057664 A1 beschreibt eine Vorrichtung zum Justieren eines schwenkbar montierten Rotorblattes eines Windenergiewandlers, mit einem ersten Antrieb und einem zweiten Antrieb, die zusammenwirken, um das Rotorblatt zwischen einer aus dem Wind genommenen Position und einer in den Wind gedrehten Position zu drehen, und einer ersten aktivierbaren Betriebssperre, die mit dem Rotorblatt verbunden ist und die in einem aktivierten Zustand das Drehen des Rotorblattes in die in den Wind gedrehte Position verhindert, aber das Drehen des Rotorblattes in die aus dem Wind genommene Position gestattet, einem Detektor zum Detektieren eines Ausfalls des ersten Antriebs, und einer Steuereinheit, die den zweiten Antrieb veranlasst, das Rotorblatt in die aus dem Wind genommene Position zu drehen, wenn der Detektor den Ausfall des ersten Antriebs detektiert hat.

Die JP 2004 232500 A beschreibt einen Gierantrieb für die Gondel einer Windkraftanlage, mit einem Getriebe und einem Motor, mittels welchem die Gondel unter Zwischenschaltung des Getriebes drehbar ist, wobei zwischen dem Motor und dem Getriebe eine Kupplung und eine Bremse angeordnet sind. Die Kupplung ist entweder zwischen dem Motor und dem Getriebe oder in dem Getriebe angeordnet, wobei eine Motorbremse an einer Motorwelle auf einer dem Getriebe abgewandten Seite des Motors vorgesehen sein kann. Falls die Windgeschwindigkeit einen vorgeschrieben Wert bei ausgesetzter Stromerzeugung übersteigt, werden die Kupplung und die Bremse gelöst, sodass die Gondel frei drehen kann.

Aus der DE 697 03 622 T2 ist eine Vorrichtung für eine Windkraftanlage bekannt, die für die Übertragung und Dämpfung von Gierbewegungen vorgesehen ist, wobei die Vorrichtung ein Gier-Lager und einen Gierbewegungsdrehantrieb, die eine Rotation der Maschinenanlage um eine vertikale Achse ermöglichen sowie eine Antriebsvorrichtung zum Antrieb der Maschinenanlage um eine vertikale Achse umfasst. Ferner ist eine Kupplung zur Übertragung des Momentes der Antriebsvorrichtung zu dem Gierbewegungsdrehantrieb vorgesehen und derart angeordnet, dass das durch die Kupplung übertragene Moment durch die Differenz der Drehbewegungsgeschwindigkeit der Antriebs- und Abtriebswelle der Kupplung ermittelt wird.

Durch die Kupplung ist es möglich, Lastspitzen zu dämpfen. Nachteilig ist aber, dass diese nicht steuerbare Dämpfung den Giervorgang beeinträchtigen kann.

Ausgehend hiervon liegt der Erfindung die Aufgabe zugrunde, eine derartige Beeinträchtigung des Giervorgangs vermeiden zu können.

Diese Aufgabe wird erfindungsgemäß durch eine Steuervorrichtung nach Anspruch 1 gelöst. Bevorzugte Weiterbildungen der Erfindung sind in den Unteransprüchen und in der nachfolgenden Beschreibung gegeben.

Die erfindungsgemäße Steuervorrichtung, insbesondere für ein Giersystem einer Windkraftanlage, weist wenigstens eine zwischen eine Tragstruktur und einen an der Tragsstruktur um eine Gierachse drehbar gelagerten Maschinenträger geschaltete und einen oder wenigstens einen Elektromotor umfassende Stelleinrichtung, wenigstens ein Dämpfungsglied, mittels welchem oder mit Hilfe dessen in einem mit der Stelleinrichtung und/oder dem Elektromotor verbundenen Zustand eine Drehbewegung des Maschinenträgers relativ zu der Tragstruktur um die Gierachse dämpfbar ist, und wenigstens eine Schalteinrichtung auf, mittels welcher das Dämpfungsglied von der Stelleinrichtung und/oder von dem Elektromotor trennbar und somit deaktivierbar ist.

Durch die Deaktivierbarkeit des Dämpfungsglieds ist der zuvor beschriebene Nachteil vermeidbar.

Bevorzugt ist das Dämpfungsglied mittels der Schalteinrichtung mit der Stelleinrichtung und/oder dem Elektromotor verbindbar und somit aktivierbar. Je nach Bedarf kann somit das Dämpfungsglied mittels der Schalteinrichtung aktiviert und deaktiviert werden. Insbesondere ist das Dämpfungsglied mittels der Schalteinrichtung wahlweise mit dem Elektromotor verbindbar und/oder von diesem trennbar. Vorteilhaft ist die Schalteinrichtung zwischen das Dämpfungsglied und die Stelleinrichtung und/oder zwischen das Dämpfungsglied und den Elektromotor geschaltet.

Bevorzugt ist eine Stromversorgung vorgesehen, die insbesondere eine Stromversorgung für den Elektromotor bildet. Vorzugsweise ist der Elektromotor mittels der Stromversorgung mit elektrischem Strom versorgbar. Die Stromversorgung ist beispielsweise durch ein elektrisches Netz gegeben. Ferner kann die Stromversorgung eine Notstromversorgung umfassen. Der elektrische Strom kann ein Gleichstrom oder ein Wechselstrom, insbesondere ein Drehstrom sein. Das elektrische Netz ist bevorzugt ein Wechselstromnetz, vorzugsweise ein Drehstromnetz.

Eine Drehung oder Drehbewegung des Maschinenträgers relativ zu der Tragstruktur um die Gierachse ist insbesondere mittels der Stelleinrichtung, insbesondere mittels des Elektromotors steuerbar oder regelbar. Vorteilhaft ist wenigstens eine Steuereinrichtung vorgesehen, mittels welcher der Elektromotor steuerbar oder regelbar ist. Insbesondere ist der Elektromotor, vorzugsweise mittels der Steuereinrichtung, derart steuerbar oder regelbar, dass eine Drehung oder Drehbewegung des Maschinenträgers relativ zu der Tragstruktur um die Gierachse erzeugbar und/oder bremsbar und/oder dämpfbar ist. Die Steuereinrichtung ist bevorzugt eine elektrische Steuereinrichtung und vorteilhaft elektrisch mit dem Elektromotor verbunden. Insbesondere umfasst die Steuereinrichtung einen oder wenigstens einen Umrichter und/oder Frequenzumrichter. Vorzugsweise ist mittels der Steuereinrichtung der dem Elektromotor zugeführte oder zuführbare Strom steuerbar oder regelbar. Bevorzugt ist mittels der Steuereinrichtung die Stromstärke und/oder Amplitude und/oder Frequenz und/oder Phase dieses Stroms steuerbar oder regelbar. Insbesondere ist die Steuereinrichtung mittels der Stromversorgung mit elektrischem Strom versorgbar.

An dem Maschinenträger ist bevorzugt ein durch Wind um eine Rotorachse drehbarer Rotor drehbar gelagert. Die Rotorachse ist vorzugsweise quer oder näherungsweise quer zur Gierachse ausgerichtet. Insbesondere ist die Rotorachse horizontal oder näherungsweise horizontal ausgerichtet. Bevorzugt ist die Rotorachse gegenüber der Horizontalen geringfügig geneigt. Vorteilhaft ist der Rotor an der Lee-Seite des Maschinenträgers angeordnet. Alternativ kann der Rotor aber auch an der Luv-Seite des Maschinenträgers angeordnet sein.

Der Rotor umfasst bevorzugt eine Rotornabe und ein oder mehrere an der Rotornabe gelagerte Rotorblätter, die sich insbesondere quer oder näherungsweise quer zur Rotorachse von der Rotornabe wegerstrecken. Vorzugsweise ist das oder jedes der Rotorblätter an der Rotornabe um eine Blattachse drehbar gelagert, die insbesondere quer oder näherungsweise quer zur Rotorachse verläuft. Die Anzahl der Rotorblätter beträgt bevorzugt eins, wenigstens eins, zwei, wenigstens zwei, drei oder wenigstens drei. Insbesondere sind die Rotorblätter rings der Rotorachse gleichmäßig verteilt angeordnet.

Der Maschinenträger trägt bevorzugt einen elektrischen Generator, der von dem Rotor antreibbar ist. Insbesondere ist der Generator mit einer Rotorwelle des Rotors verbunden. Zwischen den Generator und den Rotor und/oder zwischen den Generator und die Rotorwelle kann ein Rotorgetriebe geschaltet sein.

Die Tragstruktur umfasst oder bildet bevorzugt einen Turm, der insbesondere mit einem Fundament oder einer Gründung im Erdboden oder Seeboden verankert ist. Die Längsachse der Tragstruktur und/oder des Turms fällt bevorzugt mit der Gierachse zusammen. Insbesondere ist die Gierachse vertikal oder näherungsweise vertikal ausgerichtet. Der Maschinenträger ist vorzugsweise auf der Tragstruktur angeordnet.

Der Elektromotor umfasst bevorzugt eine Motorwelle, die insbesondere mittels des Elektromotors drehbar ist. Ferner umfasst der Elektromotor vorzugsweise einen Ständer und einen relativ zu diesem drehbaren Läufer, der insbesondere die Motorwelle umfasst und/oder starr oder drehstarr mit dieser verbunden ist. Der Ständer umfasst bevorzugt wenigstens eine, vorzugsweise mehrere, elektrische Ständerwicklungen. Der Läufer umfasst bevorzugt wenigstens eine, vorzugsweise mehrere, elektrische Läuferwicklungen. Der Läufer kann auch als Käfigläufer ausgebildet sein, sodass die Läuferwicklung insbesondere mehrere Leiterstäbe umfasst, die an ihren Enden elektrisch miteinander verbunden sind. In diesem Fall bildet der Elektromotor z.B. eine Asynchronmaschine. Der Elektromotor kann auch als permanenterregter Elektromotor ausgebildet sein. In diesem Fall trägt der Läufer oder der Ständer wenigstens einen, vorzugsweise mehrere, Permanentmagnete, insbesondere anstelle der jeweiligen Wicklung oder Wicklungen. Der Elektromotor kann ein Gleichstrommotor oder ein Wechselstrommotor, insbesondere ein Drehstrommotor sein.

Der Ständer des Elektromotors ist bevorzugt fest, insbesondere starr oder drehstarr, mit dem Maschinenträger oder mit der Tragstruktur verbunden. Vorzugsweise umfasst der Elektromotor ein starr oder drehstarr mit dem Ständer verbundenes und/oder diesen umfassendes Motorgehäuse. Vorteilhaft ist das Motorgehäuse fest, insbesondere starr oder drehstarr, mit dem Maschinenträger oder mit der Tragstruktur verbunden.

Die Stelleinrichtung umfasst bevorzugt eine Ausgangswelle, die, insbesondere drehstarr, mit dem Maschinenträger oder mit der Tragstruktur verbunden oder gekoppelt ist. Vorteilhaft ist mit der Ausgangswelle ein Ritzel, insbesondere starr oder drehstarr, verbunden, welches mit einem Zahnkranz kämmt und/oder ineinander greift, der, vorzugsweise fest, insbesondere starr oder drehstarr, mit dem Maschinenträger oder der Tragstruktur verbunden ist. Die Ausgangswelle der Stelleinrichtung ist, vorzugsweise fest, insbesondere starr oder drehstarr, mit der Motorwelle verbunden oder durch diese gebildet.

Das Dämpfungsglied ist ein passives Dämpfungsglied. Darunter ist insbesondere zu verstehen, dass das Dämpfungsglied auch bei Ausfall der Stromversorgung funktionsfähig ist und/oder dass die dämpfende Eigenschaft des Dämpfungsglieds und/oder die Dämpfung der oder einer Drehbewegung des Maschinenträgers relativ zu der Tragstruktur um die Gierachse nicht aktiv steuerbar ist. Allerdings kann die Dämpfung abhängig von der Geschwindigkeit und/oder einer Geschwindigkeitsänderung der Drehbewegung des Maschinenträgers relativ zu der Tragstruktur um die Gierachse sein.

Bevorzugt ist der Maschinenträger durch Wind relativ zu der Tragstruktur um die Gierachse drehbar. Vorteilhaft ist der Rotor dabei an der Lee-Seite des Maschinenträgers angeordnet. Insbesondere handelt es sich bei dem Giersystem um ein passives Giersystem.

Gemäß einer Ausgestaltung ist der Elektromotor, vorzugsweise mittels der Steuereinrichtung, als Dämpfer betreibbar, mittels welchem eine, insbesondere durch Wind hervorgerufene, Drehung oder Drehbewegung des Maschinenträgers relativ zu der Tragstruktur um die Gierachse dämpfbar ist. Dieser Dämpfer bildet bevorzugt einen aktiven Dämpfer. Darunter ist insbesondere zu verstehen, dass dieser Dämpfer bei Ausfall der Stromversorgung nicht funktionsfähig ist und/oder dass die dämpfende Eigenschaft dieses Dämpfers und/oder die Dämpfung der oder einer Drehung oder Drehbewegung des Maschinenträgers relativ zu der Tragstruktur um die Gierachse mittels der Steuereinrichtung steuerbar ist. In diesem Fall kann es sinnvoll sein, das Dämpfungsglied lediglich bei Ausfall des Elektromotors oder der Stromversorgung zu aktivieren, insbesondere deshalb, da bei Ausfall der Stromversorgung der Elektromotor allein (d.h. ohne Dämpfungsglied) der oder einer Drehbewegung des Maschinenträgers kein nennenswertes Drehmoment mehr entgegen setzen kann.

Gemäß einer Weiterbildung ist mittels der Schalteinrichtung das Dämpfungsglied bei Ausfall des Elektromotors oder bei Ausfall der Stromversorgung mit der Stelleinrichtung und/oder dem Elektromotor, insbesondere automatisch, verbunden oder verbindbar. Vorzugsweise ist mittels der Schalteinrichtung das Damptungsglied bei betriebsbereitem Elektromotor oder bei vorhandener Stromversorgung, insbesondere automatisch, von der Stelleinrichtung und/oder von dem Elektromotor getrennt oder trennbar.

Gemäß einer nicht beanspruchten Ausgestaltung ist der Elektromotor als permanent erregter Elektromotor ausgebildet, wobei das Dämpfungsglied wenigstens einen, vorzugsweise mehrere elektrische Widerstände umfasst und wobei die Schalteinrichtung wenigstens einen, vorzugsweise mehrere bei Ausfall der Stromversorgung selbstschließende elektrische Schalter umfasst, mittels welchem oder welchen der Elektromotor bei Ausfall der Stromversorgung, insbesondere automatisch, mit dem oder den Widerständen elektrisch belastbar oder belastet ist. Bei vorhandener Stromversorgung sind der oder die Widerstände mittels des oder der Schalter, insbesondere automatisch, von dem Elektromotor getrennt oder trennbar. Bei Ausfall der Stromversorgung wird der permanenterregte Elektromotor durch die oder eine, insbesondere durch Wind hervorgerufene, Drehbewegung des Maschinenträgers relativ zu der Tragstruktur um die Gierachse angetrieben und arbeitet somit im Generatorbetrieb. Der von dem Elektromotor erzeugte elektrische Strom erwärmt den oder die Widerstände, sodass der Elektromotor als Dämpfer, insbesondere als passiver Dämpfer, arbeitet. Die Drehbewegung des Maschinenträgers relativ zu der Tragstruktur um die Gierachse ist somit durch den mit dem Dämpfungsglied verbundenen Elektromotor dämpfbar. Der oder die elektrischen Widerstände sind bei Ausfall der Stromversorgung durch den oder die Schalter insbesondere mit der oder den Läuferwicklungen oder mit der oder den Ständerwicklungen elektrisch verbunden oder verbindbar.

Der oder jeder der Schalter ist bevorzugt in den schließenden Zustand vorgespannt, insbesondere durch wenigstens eine Feder. Vorteilhaft ist wenigstens ein Elektromagnet vorgesehen, mittels welchem der oder die Schalter in den geöffneten Zustand überführbar sind, insbesondere gegen die Kraft der Feder. Dazu ist der Elektromagnet bevorzugt mit elektrischem Strom versorgbar, der insbesondere von der Stromversorgung zur Verfügung gestellt wird oder stellbar ist.

Erfindungsgemäß umfasst das Dämpfungsglied einen passiven Dämpfer, wobei die Schalteinrichtung eine oder wenigstens eine bei Ausfall der Stromversorgung selbstkuppelnde Kupplung umfasst, mittels welcher der Elektromotor bei Ausfall der Stromversorgung, vorzugsweise automatisch, mit dem Dämpfer verbunden oder verbindbar und/oder parallel zum Dämpfer geschaltet oder schaltbar ist. Bei vorhandener Stromversorgung ist der Dämpfer mittels der Kupplung, insbesondere automatisch, von dem Elektromotor getrennt oder trennbar ist. Durch den Dämpfer ist somit auch bei Ausfall der Stromversorgung eine Dämpfung der oder einer Drehung oder Drehbewegung des Maschinenträgers relativ zu der Tragstruktur um die Gierachse möglich. Der Dämpfer ist bevorzugt zwischen den Elektromotor und den Maschinenträger oder zwischen den Elektromotor und die Tagstruktur geschaltet.

Erfindungsgemäß umfasst der Elektromotor die oder eine Motorwelle, wobei das Dämpfungsglied den oder einen Dämpfer umfasst, der ein passiver Dämpfer ist. Ferner umfasst die Schalteinrichtung die oder eine oder wenigstens die oder wenigstens eine bei Ausfall der Stromversorgung selbstkuppelnde Kupplung, mittels welcher die Motorwelle bei Ausfall der Stromversorgung, insbesondere automatisch, mit dem Dämpfer, vorzugsweise mechanisch, verbunden oder verbindbar ist. Bei vorhandener Stromversorgung ist der Dämpfer mittels der Kupplung, insbesondere automatisch, von der Motorwelle getrennt oder trennbar. Der Dämpfer ist bevorzugt zwischen die Motorwelle und den Maschinenträger oder zwischen die Motorwelle und die Tagstruktur geschaltet. Insbesondere bildet diese Weiterbildung eine Realisierungsmöglichkeit der zuvor genannten alternativen Ausgestaltung.

Bevorzugt ist das Dämpfungsglied durch den Dämpfer gebildet. Vorzugsweise bildet oder umfasst der Dämpfer und/oder das Dämpfungsglied einen hydraulischen Dämpfer. Bei dem hydraulischen Dämpfer handelt es sich z.B. um eine hydrodynamische Kupplung oder Visko-Kupplung.

Die Kupplung umfasst bevorzugt eine Eingangswelle, eine Ausgangswelle und eine Kupplungsanordnung, mittels welcher die beiden Wellen der Kupplung, insbesondere drehstarr, miteinander kuppelbar sind. Die Eingangswelle der Kupplung ist bevorzugt fest, insbesondere starr oder drehstarr, mit der Motorwelle verbunden und/oder durch diese gebildet. Die Ausgangswelle der Kupplung ist bevorzugt fest, insbesondere starr oder drehstarr, mit einer Eingangswelle des Dämpfungsglieds und/oder des Dämpfers verbunden und/oder durch diese gebildet. Die Kupplungsanordnung ist bevorzugt in den kuppenden Zustand vorgespannt, insbesondere durch wenigstens eine Feder. Vorteilhaft ist die Kupplungsanordnung durch wenigstens einen Elektromagneten in den entkuppelten Zustand überführbar, insbesondere gegen die Kraft der Feder. Der Elektromagnet ist dazu bevorzugt mit elektrischem Strom versorgbar, der insbesondere von der Stromversorgung zur Verfügung stellbar ist.

Der Dämpfer und/oder das Dämpfungsglied umfasst bevorzugt einen Impeller mit einem Impellergehäuse und einem in diesem drehbaren Innenteil, welches vorzugsweise fest, insbesondere starr oder drehstarr, mit der Eingangswelle des Dämpfers und/oder des Dämpfungsglieds verbunden ist. Das Innenteil ist z.B. ein Propeller. Vorteilhaft ist in dem Impellergehäuse eine Flüssigkeit, insbesondere eine Hydraulikflüssigkeit vorgesehen. Das Impellergehäuse ist vorzugsweise fest, insbesondere starr oder drehstarr, mit dem Motorgehäuse und/oder mit dem Ständer und/oder mit dem Maschinenträger oder der Tragstruktur verbunden. Gemäß einer Alternative ist z.B. das Impellergehäuse vorzugsweise fest, insbesondere starr oder drehstarr, mit der Eingangswelle des Dämpfers und/oder des Dämpfungsglieds verbunden ist. In diesem Fall ist das Innenteil vorzugsweise fest, insbesondere starr oder drehstarr, mit dem Motorgehäuse und/oder mit dem Ständer und/oder mit dem Maschinenträger oder der Tragstruktur verbunden.

Gemäß einer Weiterbildung umfasst die Stelleinrichtung ein oder wenigstens ein mit dem Elektromotor verbundenes Getriebe. insbesondere ist das Getriebe mit dem Elektromotor in Reihe geschaltet. Das Getriebe ist insbesondere eingangsseitig mit dem Elektromotor und ausgangsseitig mit dem Maschinenträger oder mit der Tragstruktur gekoppelt. Vorteilhaft umfasst das Getriebe eine Eingangswelle und eine Ausgangswelle, wobei die Eingangswelle mit dem Elektromotor und/oder der Motorwelle, insbesondere starr oder drehstarr, verbunden oder durch diese gebildet ist, und wobei die Ausgangswelle, insbesondere starr oder drehstarr, mit der Tragstruktur oder dem Maschinenträger verbunden oder gekoppelt ist. Bevorzugt ist die Ausgangswelle des Getriebes mit einem Ritzel, insbesondere starr oder drehstarr, verbunden, welches mit dem oder einem Zahnkranz in Eingriff steht und/oder kämmt, der, vorzugsweise fest, insbesondere starr oder drehstarr, mit dem Maschinenträger oder der Tragstruktur verbunden ist. Vorteilhaft ist die Ausgangsquelle der Stelleinrichtung, vorzugsweise fest, insbesondere starr oder drehstarr, mit der Ausgangswelle des Getriebes verbunden oder durch diese gebildet. Bevorzugt bildet das Ritzel der Ausgangswelle des Getriebes das Ritzel der Ausgangswelle der Stelleinrichtung. Das Getriebe ist vorzugsweise ein Untersetzungsgetriebe. Vorteilhaft ist die Ausgangswelle des Getriebes drehstarr mit der Eingangswelle des Getriebes gekoppelt. Insbesondere ist das Getriebe ein Zahnradgetriebe.

Gemäß einer Weiterbildung ist die Motorwelle an ihrem einen Ende mit dem Getriebe und/oder mit der Eingangswelle des Getriebes und an ihrem anderen Ende mit der Kupplung und/oder der Eingangswelle der Kupplung, vorzugsweise fest, insbesondere starr oder drehstarr, verbunden. Bevorzugt ist die Motorwelle und/oder der Elektromotor zwischen die Kupplung und das Getriebe geschaltet, sodass sich ein insgesamt kompakter Aufbau ergibt.

Gemäß einer Weiterbildung ist mit dem Elektromotor die oder eine Steuereinrichtung elektrisch verbunden, mittels welcher der Elektromotor, insbesondere bei vorhandener Stromversorgung, steuerbar oder regelbar ist. Vorteilhaft ist die oder eine, insbesondere durch Wind hervorgerufene, Drehung oder Drehbewegung des Maschinenträgers relativ zu der Tragstruktur um die Gierachse durch den Elektromotor dämpfbar. Wie oben bereits angesprochen, wird der Elektromotor somit insbesondere nicht zum Drehen des Maschinenträgers, sondern vorzugsweise zum Dämpfen der oder einer, insbesondere durch Wind hervorgerufenen, Drehung oder Drehbewegung des Maschinenträgers relativ zu der Tragstruktur um die Gierachse eingesetzt. Dies ist insbesondere dann sinnvoll, wenn der Rotor auf der Lee-Seite des Maschinenträgers angeordnet ist. In diesem Fall ist der Maschinenträger durch den Wind in eine Stellung drehbar, in welcher die Rotorachse parallel oder näherungsweise parallel zur Windrichtung ausgerichtet ist. Dies funktioniert im Prinzip wie bei einer Windfahne. Die erfindungsgemäße Steuervorrichtung bildet in diesem Sinne bevorzugt eine Dämpfungsvorrichtung. Da es aufgrund von Turbulenzen, Windböen, Windscherung etc. zu einer ungewollten Drehbewegung des Maschinenträges kommen kann, welche diesen aus der gewünschten Position herausdreht, ist eine solche Drehbewegung mittels des Elektromotors durch Aufbau eines Gegenmoments dämpfbar. Im Falle eines Stromausfalls übernimmt diese Dämpfungsfunktion das Dämpfungsglied und/oder der (passive) Dämpfer. Bevorzugt ist es auch möglich, den Maschinenträger aktiv mittels des Elektromotors zu drehen. Die erfindungsgemäße Steuervorrichtung bildet in diesem Sinne insbesondere eine Antriebsvorrichtung. Dies ist z.B. bei Korrekturen eines größeren Gierfehlers oder zu Wartungszwecken sinnvoll, beispielsweise um eine Verdrehung von zwischen dem Maschinenträger und der Tragstruktur verlaufenen Leitungen rückgängig zu machen. Ferner ist ein aktives Drehen des Maschinenträgers dann sinnvoll, wenn der Rotor auf der Luv-Seite des Maschinenträgers angeordnet ist. Bevorzugt bildet die erfindungsgemäße Steuervorrichtung eine Dämpfungs- und/oder Antriebsvorrichtung.

Gemäß einer Ausgestaltung umfasst die erfindungsgemäße Steuervorrichtung mehrere Stelleinrichtungen, die jeweils zwischen die Tragstruktur und den Maschinenträger geschaltet sind und jeweils einen oder wenigstens einen Elektromotor umfassen. Jede dieser Stelleinrichtungen kann gemäß der zuvor beschriebenen Stelleinrichtung weitergebildet sein. Insbesondere sind die Elektromotoren jeweils mit wenigstens einer Steuereinrichtung elektrisch verbunden, mittels welcher der jeweilige Elektromotor steuerbar oder regelbar ist. Bevorzugt ist jeder der Elektromotoren mittels der jeweiligen Steuereinrichtung wahlweise aktivierbar und/oder deaktivierbar. Jede der Steuereinrichtungen kann gemäß der zuvor beschriebenen Steuereinrichtung weitergebildet sein. Insbesondere sind die Steuereinrichtungen miteinander vernetzt.

Bevorzugt ist ferner das wenigstens eine Dämpfungsglied vorgesehen, mittels welchem oder mit Hilfe dessen in einem mit den Elektromotoren verbundenen Zustand eine Drehbewegung des Maschinenträgers relativ zu der Tragstruktur um die Gierachse dämpfbar ist. Insbesondere ist das Dämpfungsglied mittels der Schalteinrichtung von den Elektromotoren trennbar und somit deaktivierbar. Ferner ist das Dämpfungsglied bevorzugt mittels der Schalteinrichtung mit den Elektromotoren verbindbar und somit aktivierbar.

Gemäß einer Weiterbildung ist je Stelleinrichtung und/oder je Elektromotor ein Dämpfungsglied vorgesehen, mittels welchem oder mit Hilfe dessen in einem mit dem jeweiligen Elektromotor verbundenen Zustand eine Drehbewegung des Maschinenträgers relativ zu der Tragstruktur um die Gierachse dämpfbar ist. Jedes der Dämpfungsglieder kann gemäß dem zuvor beschriebenen Dämpfungsglied weitergebildet sein.

Vorzugsweise ist je Stelleinrichtung und/oder je Elektromotor eine Schalteinrichtung vorgesehen, mittels welcher das jeweilige Dämpfungsglied von dem jeweiligen Elektromotor trennbar und somit deaktivierbar ist. Ferner ist jedes der Dämpfungsglieder bevorzugt mittels der jeweiligen Schalteinrichtung mit dem jeweiligen Elektromotor verbindbar und somit aktivierbar. Jede der Schalteinrichtungen kann gemäß der zuvor beschriebenen Schalteinrichtung weitergebildet sein.

Die Erfindung betrifft ferner eine Windkraftanlage mit einer Tragstruktur, einem an der Tragstruktur um eine Gierachse drehbar gelagerten Maschinenträger, und wenigstens einer Steuervorrichtung, die wenigstens eine zwischen die Tragstruktur und den Maschinenträger geschaltete und einen oder wenigstens einen Elektromotor umfassende Stelleinrichtung, wenigstens ein Dämpfungsglied, mittels welchem oder mit Hilfe dessen in einem mit der Stelleinrichtung und/oder dem Elektromotor verbundenen Zustand eine Drehbewegung des Maschinenträgers relativ zu der Tragstruktur um die Gierachse dämpfbar ist, und wenigstens eine Schalteinrichtung aufweist, mittels welcher das Dämpfungsglied von der Stelleinrichtung und/oder dem Elektromotor trennbar und somit deaktivierbar ist. Bei der Steuervorrichtung handelt es sich insbesondere um eine erfindungsgemäße Steuervorrichtung, die gemäß allen in diesem Zusammenhang erläuterten Ausgestaltungen weitergebildet sein kann. Vorzugsweise ist das Dämpfungsglied mittels der Schalteinrichtung auch mit der Stelleinrichtung und/oder dem Elektromotor verbindbar und somit aktivierbar.

Die Windkraftanlage kann ein Luv-Läufer oder ein Lee-Läufer sein. Bevorzugt handelt es sich bei der Windkraftanlage aber um einen Lee-Läufer.

Die Erfindung wird nachfolgend anhand bevorzugter Ausführungsformen unter Bezugnahme auf die Zeichnung beschrieben. In der Zeichnung zeigen:
Fig. 1 eine schematische Seitenansicht einer Windkraftanlage,
Fig. 2 eine schematische Seitenansicht eines Maschinenträgers der Windkraftanlage nach Fig. 1 mit zwei Steuervorrichtungen gemäß einer Ausführungsform,
Fig. 3 eine der Steuervorrichtungen nach Fig. 2 in perspektivischer Ansicht,
Fig. 4 die Steuervorrichtung nach Fig. 3 in Seitenansicht,
Fig. 5 eine schematische Schnittansicht der Steuervorrichtung entlang der aus Fig. 4 ersichtlichen Schnittlinie A-A,
Fig. 6 einen schematischen Schaltplan einer Steuervorrichtung gemäß einer nicht beanspruchten Ausführungsform und
Fig. 7 einen schematischen Schaltplan mit mehreren Steuervorrichtungen gemäß der zweiten Ausführungsform.

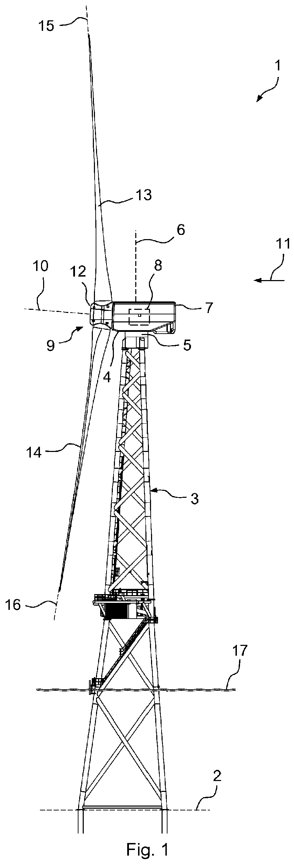

Aus Fig. 1 ist eine schematische Seltenansicht einer Windkraftanlage 1 ersichtlich, die im Meer angeordnet und im Meeresboden 2 verankert ist. Der Wasserspiegel des Meeres ist schematisch angedeutet und mit dem Bezugszeichen 17 gekennzeichnet. Die Windkraftanlage 1 umfasst eine Tragstruktur 3 in Form eines Gitterturms, auf der ein Maschinenträger 4 über ein Azimutlager 5 um eine vertikale Gierachse 6 drehbar gelagert ist. Der Maschinenträger 4 trägt ein Maschinenhaus 7, in dem ein elektrischer Generator 8 angeordnet ist. An dem Maschinenträger 4 ist ein Rotor 9 um eine Rotorachse 10 drehbar gelagert, die quer oder näherungsweise quer zur Gierachse 6 verläuft. Vorzugsweise ist die Rotorachse 10 aber geringfügig gegenüber der Horizontalen geneigt. Der Rotor 9 umfasst eine Rotornabe 12, an der zwei Rotorblätter 13 und 14 um ihre jeweilige Blattachse 15 bzw. 16 drehbar gelagert sind, wobei die Blattachsen 15 und 16 quer oder näherungsweise quer zur Rotorachse 10 verlaufen. Die Rotornabe 12 ist drehstarr mit einer Rotorwelle (nicht gezeigt) verbunden, mittels welcher der Rotor 9 mit dem Generator 8 verbunden ist. Der Rotor 9 wird durch Wind 11 um seine Rotorachse 10 gedreht und treibt den Generator 8 an.

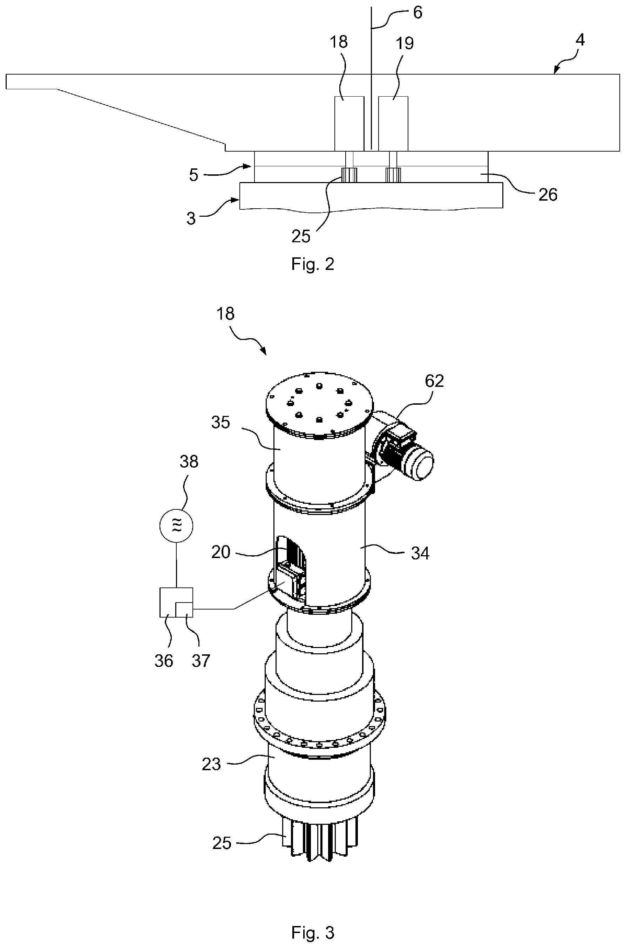

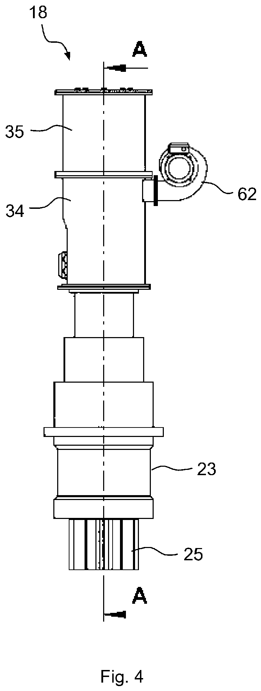

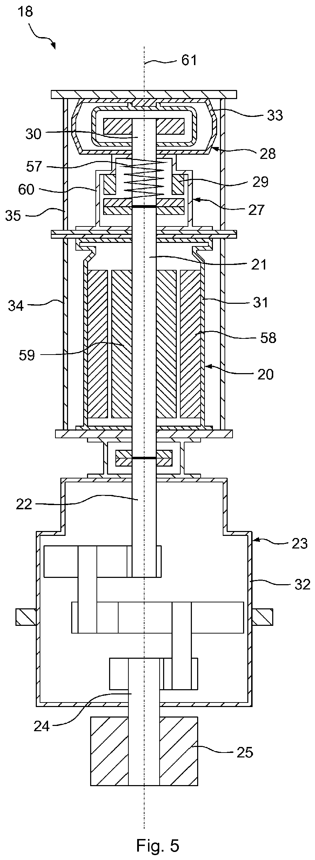

Aus Fig. 2 ist eine schematische Seitenansicht des Maschinenträgers 4 ersichtlich, an dem zwei Steuervorrichtungen 18 und 19 gemäß einer ersten Ausführungsform der Erfindung befestigt sind. Die Steuervorrichtungen 18 und 19 sind gleichartig aufgebaut, wobei eine perspektivische Ansicht der Steuervorrichtung 18 aus Fig. 3 ersichtlich ist. Ferner ist eine Seitenansicht der Steuervorrichtung 18 aus Fig. 4 und eine schematische Schnittansicht der Steuervorrichtung 18 entlang der in Fig. 4 dargestellten Schnittlinie A-A aus Fig. 5 ersichtlich.

Die Steuervorrichtung 18 umfasst einen Elektromotor 20, dessen Motorwelle 21 um eine Achse 61 drehbar und mit einer Eingangswelle 22 eines Getriebes 23 drehstarr verbunden ist. Eine Ausgangswelle 24 des Getriebes 23 ist drehstarr mit einem Ritzel 25 verbunden, welches mit einem Zahnkranz 26 (siehe Fig. 2) kämmt, der starr mit der Tragstruktur 3 verbunden und im oberen Endbereich der Tragstruktur 3 vorgesehen ist. Die Motorwelle 21 ist mit ihrem dem Getriebe 23 abgewandten Ende unter Zwischenschaltung einer Kupplung 27 mit einem hydraulischen Dämpfer 28 verbunden. Die Kupplung 27 umfasst wenigstens einen Elektromagnet 29, mittels welchem die Kupplung 27 gegen die Kraft einer Feder 57 im geöffneten Zustand gehalten wird, solange ein ausreichend großer elektrischer Strom durch den Elektromagneten 29 fließt. Bei Ausfall des Stroms nimmt die Kupplung 27 automatisch ihren aus Fig. 5 ersichtlichen gekuppelten Zustand an und verbindet die Motorwelle 21 mit einer Eingangswelle 30 des Dämpfers 28. Der Elektromotor 20 umfasst ein Motorgehäuse 31, welches einen Ständer des Elektromotors 20 bildet und elektrische Ständerwicklungen 58 umfasst. Ferner umfasst die Motorwelle 21 elektrische Läuferwicklungen 59 und bildet einen Läufer des Elektromotors 20. Ferner umfasst das Getriebe 23 ein Getriebegehäuse 32, der Dämpfer 28 umfasst ein Dämpfergehäuse 33, und die Kupplung umfasst ein Kupplungsgehäuse 60. Gemäß der Ausführungsform ist der Elektromotor 20 ferner in einem ersten Außengehäuse 34 angeordnet, wobei die Kupplung 27 und der Dämpfer 28 in einem zweiten Außengehäuse 35 angeordnet sind, welches insbesondere mit Öl gefüllt ist. An dem ersten Außengehäuse 34 ist ein Lüfter 62 angeschlossen, mittels welchem der Elektromotor 20 gekühlt wird. Alternativ können die Außengehäuse 34 und 35 aber auch durch ein gemeinsames Außengehäuse gebildet sein oder entfallen. Bilden die Außengehäuse 34 und 35 ein gemeinsames Außengehäuse, so wird dieses insbesondere mit einem Lüfter belüftet. Die Gehäuse 31, 32, 33, 34, 35 und 60 sind starr miteinander verbunden. Ferner sind diese Gehäuse starr mit dem Maschinenträger 4 verbunden.

Der Elektromotor ist über eine Steuereinrichtung 36, die einen Frequenzumrichter 37 umfasst, mit einem elektrischen Netz 38 verbunden. Das elektrische Netz 38 bildet eine Stromversorgung für die Steuereinrichtung 36 und den Elektromotor 20. Ferner wird der Elektromagnet 29 aus dem elektrischen Netz 38 mit Strom versorgt.

Ändert der Wind 11 seine Richtung, folgt der Maschinenträger 4 dieser Richtungsänderung und dreht sich um die Gierachse 6. Da die Windkraftanlage 1 als Lee-Läufer ausgebildet ist, verhält sich der Maschinenträger 4 näherungsweise wie eine Windfahne. Insbesondere versucht sich der Maschinenträger 4 so auszurichten, dass die Rotorachse 10 in Windrichtung 11 ausgerichtet ist. Während dieser Drehung, die auch als Gieren bezeichnet wird, wird das Ritzel 25 gedreht, welches unter Zwischenschaltung des Getriebes 23 die Motorwelle 21 dreht. Der Elektromotor 20 wird mittels der Steuereinrichtung 36 derart angesteuert, dass diese Drehbewegung gedämpft wird. Dies ist von Vorteil, da abrupte Windrichtungsänderungen zu starken Belastungen der Windkraftanlage 1 führen können. Ferner ist durch das Dämpfen ein Überschwingen des Maschinenträgers 4 vermeidbar oder zumindest reduzierbar. Die Steuereinrichtung 36 passt die Dämpfung dabei derart an, dass die Belastung der Windkraftanlage 1 möglichst gering gehalten wird. Der Elektromotor 20, das Getriebe 23 und die Steuereinrichtung 36 bilden zusammen eine Stelleinrichtung.

Fällt das Netz 38 aus, so ist eine gesteuerte Dämpfung der Gierbewegung des Maschinenträgers nicht mehr durch die Steuereinrichtung 36 im Zusammenwirken mit dem Elektromotor 20 erzielbar. Da aber auch der Elektromagnet 29 durch das Netz 38 versorgt wird, fällt bei einem Ausfall des Netzes 38 auch der Elektromagnet 29 aus, sodass die Kupplung 27 die Motorwelle 21 automatisch mit der Eingangswelle 30 des Dämpfers 28 verbindet. Eine Dämpfung einer insbesondere durch Wind hervorgerufenen Gierbewegung des Maschinenträgers 4 ist somit auch bei einem Ausfall der Stromversorgung 38 sichergestellt. Zwar ist der Dämpfer 28 ein passiver Dämpfer, sodass die durch ihn bewirkte Dämpfung nicht immer optimal eingestellt werden kann, gleichwohl ist es mit dem Dämpfer 28 möglich, zu starke Belastungen der Windkraftanlage 1 und ein zu starkes Überschwingen des Maschinenträges 4 in weiten Bereichen zu vermeiden.

Ist das Netz 38 wieder vorhanden, wird der Elektromagnet 29 bestromt und trennt die Verbindung zwischen dem Elektromotor 20 und dem Dämpfer 28. Ferner nimmt die Steuereinrichtung 36 wieder ihren Betrieb auf und steuert die Dämpfung der Glerbewegungen des Maschinenträgers 4.

Insbesondere sind wenigstens die beiden Steuervorrichtungen 18 und 19 vorhanden. Vorteilhaft sind aber auch noch zusätzliche Steuervorrichtungen vorhanden, sodass eine stärkere Dämpfung aufgebracht werden kann. Bevorzugt sind die Steuereinrichtungen 36 aller Steuervorrichtungen miteinander vernetzt, sodass, wenn eine stärkere Dämpfung erforderlich ist, zusätzliche Steuervorrichtungen zugeschaltet werden können. Ist eine schwächere Dämpfung ausreichend, die beispielsweise mit lediglich einer oder zwei Steuervorrichtungen aufgebracht werden kann, können die zusätzlichen Steuervorrichtungen wieder deaktiviert werden.

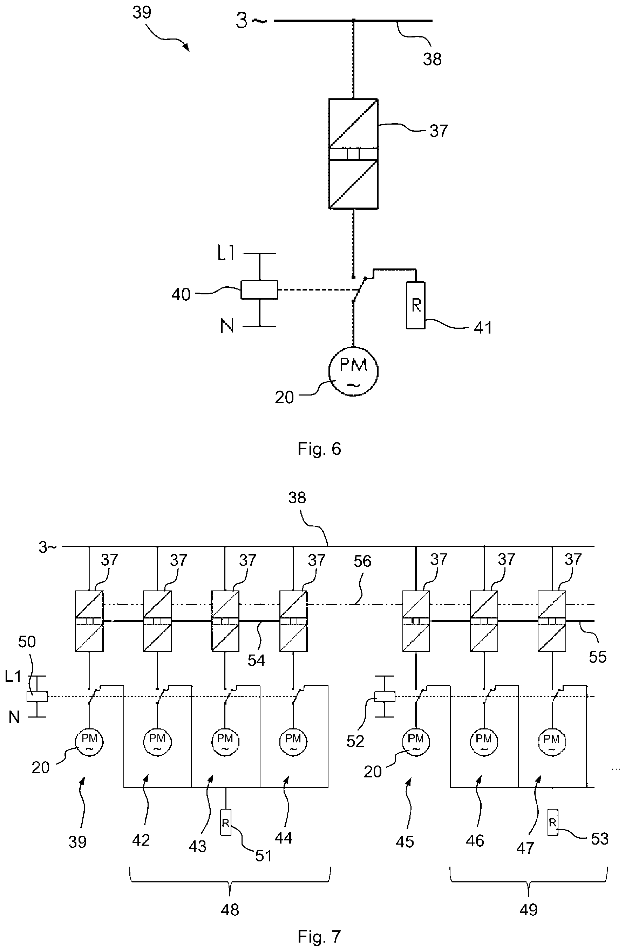

Aus Fig. 6 ist ein schematisches elektrisches Schaltbild einer Steuervorrichtung 39 gemäß einer zweien Ausführungsform ersichtlich, wobei zu der ersten Ausführungsform identische oder ähnliche Merkmale mit denselben Bezugszeichen wie bei der ersten Ausführungsform bezeichnet sind. Die Steuervorrichtung 39 weist keinen hydraulischen Dämpfer und keine Kupplung auf, ist davon abgesehen aber analog oder im Wesentlichen analog zur ersten Ausführungsform aufgebaut. Zwischen den Frequenzumrichter 37 und den Elektromotor 20 ist ein elektrischer Schalter 40, beispielsweise in Form eines Schützes, geschaltet, welcher bei vorhandener Stromversorgung 38 den Elektromotor 20 mit dem Frequenzumrichter 37 verbindet. Dazu ist der Schalter 40 an eine Phase L1 und an einen Nullleiter N der dreiphasigen Stromversorgung 38 angeschlossen. Bei vorhandener Stromversorgung 38 erfolgt die Dämpfung der Gierbewegung somit auf die gleiche Weise wie bei der ersten Ausführungsform. Bei Ausfall der Stromversorgung 38 trennt der Schalter 40 automatisch die Verbindung zwischen dem Frequenzumrichter 37 und dem Elektromotor 20 und verbindet diesen elektrisch mit einem Lastwiderstand 41, der auch mit dem Buchstaben R gekennzeichnet ist. Der Elektromotor 20 ist gemäß der zweiten Ausführungsform als permanenterregter Elektromotor PM ausgebildet und wird bei einer Gierbewegung des Maschinenträgers 4 als Generator betrieben. Der von dem Elektromotor 2ü erzeugte elektrische Strom fließt durch den Widerstand 41, der somit eine elektrische Last für den Elektromotor 20 bildet. Dadurch wird in dem Elektromotor 20 ein Magnetfeld aufgebaut, welches der Drehbewegung der Motorwelle 21 entgegenwirkt und somit die Gierbewegung des Maschinenträgers 4 dämpft. In diesem Fall bildet also der Elektromotor 20 zusammen mit dem Widerstand 41 einen passiven Dämpfer, der im Falle eines Ausfalls der Stromversorgung 38 aktiviert wird.

Die zweite Ausführungsform bildet somit eine Alternative zur ersten Ausführungsform, allerdings mit dem Unterschied, dass die passive Dämpfung gemäß der ersten Ausführungsform insbesondere ein quadratisches Dämpfungsverhalten und die passive Dämpfung gemäß der zweiten Ausführungsform insbesondere ein lineares Dämpfungsverhalten zeigt. Ferner ist es möglich, bei der ersten Ausführungsform auch nicht permanenterregte Elektromotoren einzusetzen.

Aus Fig. 7 sind neben der Steuervorrichtung 39 zusätzliche Steuervorrichtungen 42, 43, 44, 45, 46 und 47 ersichtlich, die gleichartig aufgebaut und in zwei Gruppen 48 und 49 unterteilt sind. Die Elektromotoren 20 der Gruppe 48 können bei einem Ausfall der Stromversorgung 38 über einen gemeinsamen Schalter 50 mit einem gemeinsamen elektrischen Widerstand 51 belastet werden. Ferner können die Elektromotoren der Gruppe 49 mittels eines gemeinsamen Schalters 52 mit einem gemeinsamen Widerstand 53 belastet werden. Zusätzlich sind die Frequenzumrichter 37 der Gruppe 48 über einen Bus 54 miteinander vernetzt. Ferner sind die Frequenzumrichter 37 der Gruppe 49 über einen Bus 55 miteinander vernetzt. Bevorzugt sind aber alle Frequenzumrichter 37 über einen elektrischen Bus 56 miteinander vernetzt, der ergänzend oder alternativ zu den Bussen 54 und 55 vorgesehen sein kann. Bei vorhandener Stromversorgung 38 sind wenigstens die beiden Steuervorrichtungen 39 und 45 aktiv. Wird eine stärkere Dämpfung benötigt, können die anderen Steuervorrichtungen zugeschaltet werden. Durch die Vernetzung der Frequenzumrichter untereinander ist dies auf einfache Weise möglich.

Gemäß Fig. 7 ist für die Gruppen 48 und 49 jeweils nur ein einziger Widerstand 51 bzw. 53 vorgesehen. Selbstverständlich ist es auch möglich, für jede der Steuervorrichtungen einen oder mehrere separate Widerstände vorzusehen.

### Bezugszeichenliste:

- 1: Windkraftanlage
- 2: Meeresboden
- 3: Tragstruktur
- 4: Maschinenträger
- 5: Azimutlager
- 6: Gierachse
- 7: Maschinenhaus
- 8: elektrischer Generator
- 9: Rotor
- 10: Rotorachse
- 11: Wind
- 12: Rotornabe
- 13: Rotorblatt
- 14: Rotorblatt
- 15: Blattachse
- 16: Blattachse
- 17: Wasserspiegel
- 18: Steuervorrichtung
- 19: Steuervorrichtung
- 20: Elektromotor
- 21: Motorwelle
- 22: Eingangswelle des Getriebes
- 23: Getriebe
- 24: Ausgangswelle des Getriebes
- 25: Ritzel
- 26: Zahnkranz
- 27: Kupplung
- 28: Dämpfer
- 29: Elektromagnet
- 30: Eingangswelle des Dämpfers
- 31: Motorgehäuse
- 32: Getriebegehäuse
- 33: Dämpfergehäuse
- 34: erstes Außengehäuse
- 35: zweites Außengehäsue
- 36: Steuereinrichtung
- 37: Frequenzumrichter
- 38: elektrisches Netz / Stromversorgung
- 39: Steuervorrichtung
- 40: elektrischer Schalter / Schütz
- 41: elektrischer Widerstand
- 42: Steuervorrichtung
- 43: Steuervorrichtung
- 44: Steuervorrichtung
- 45: Steuervorrichtung
- 46: Steuervorrichtung
- 47: Steuervorrichtung
- 48: Gruppe von Steuervorrichtungen
- 49: Gruppe von Steuervorrichtungen
- 50: Schalter
- 51: elektrischer Widerstand
- 52: Schalter
- 53: elektrischer Widerstand
- 54: elektrischer Bus
- 55: elektrischer Bus
- 56: elektrischer Bus
- 57: Feder
- 58: Ständerwicklung
- 59: Läuferwicklung
- 60: Kupplungsgehäuse
- 61: Drehachse
- 62: Lüfter

## Patentansprüche

1. Steuervorrichtung für ein Giersystem einer Windkraftanlage, mit wenigstens einer zwischen eine Tragstruktur (3) und einen an der Tragsstruktur (3) um eine Gierachse (6) drehbar gelagerten Maschinenträger (4) geschalteten und wenigstens einen eine Motorwelle (21) umfassenden Elektromotor (20) umfassenden Stelleinrichtung, wenigstens einem einen passiven Dämpfer (28) umfassenden Dämpfungsglied, mittels welchem oder mit Hilfe dessen in einem mit dem Elektromotor (20) verbundenen Zustand eine Drehbewegung des Maschinenträgers (4) relativ zu der Tragstruktur (3) um die Gierachse (6) dämpfbar ist, **gekennzeichnet durch** wenigstens eine Schalteinrichtung, mittels welcher das Dämpfungsglied von dem Elektromotor (20) trennbar und somit deaktivierbar ist, wobei die Schalteinrichtung eine bei Ausfall der Stromversorgung (38) des Elektromotors (20) selbstkuppelnde Kupplung (27) umfasst, mittels welcher die Motorwelle (21) bei Ausfall der Stromversorgung (38) mit dem Dämpfer (28) mechanisch verbindbar ist, der bei vorhandener Stromversorgung (38) mittels der Kupplung (27) von der Motorwelle (21) trennbar ist.

2. Steuervorrichtung nach Anspruch 1, **dadurch gekennzeichnet, dass** der Dämpfer (28) ein hydraulischer Dämpfer ist.

3. Steuervorrichtung nach Anspruch 1 oder 2, **dadurch gekennzeichnet, dass** der Dämpfer (28) eine hydrodynamische Kupplung oder Visko-Kupplung ist.

4. Steuervorrichtung nach einem der vorangehenden Ansprüche, **dadurch gekennzeichnet, dass** die Stelleinrichtung wenigstens ein mit dem Elektromotor (20) verbundenes Getriebe (23) umfasst.

5. Steuervorrichtung nach Anspruch 4, **dadurch gekennzeichnet, dass** die Motorwelle (21) zwischen die Kupplung (27) und das Getriebe (23) geschaltet ist.

6. Steuervorrichtung nach Anspruch 4 oder 5, **dadurch gekennzeichnet, dass** die Motorwelle (21) an ihrem einen Ende mit dem Getriebe (23) und an ihrem anderen Ende mit der Kupplung (27) verbunden ist.

7. Steuervorrichtung nach einem der vorangehenden Ansprüche, **gekennzeichnet durch** eine mit dem Elektromotor (20) elektrisch verbundene Steuereinrichtung (36), mittels welcher der Elektromotor (20) steuerbar oder regelbar ist.

8. Steuervorrichtung nach Anspruch 7, **dadurch gekennzeichnet, dass** der Elektromotor (20) mittels der Steuereinrichtung (36) als Dämpfer betreibbar ist, mittels welchem eine Drehung des Maschinenträgers (4) relativ zu der Tragstruktur (3) um die Gierachse (6) dämpfbar ist.

## Claims

1. Control device for a yaw system of a wind turbine, with at least one connected between a supporting structure (3) and a nacelle (4) mounted on the supporting structure (3) which is rotatable about a yaw axis (6) and at least one actuator comprising an electric motor (20) comprising a motor shaft (21), at least one damping member comprising one passive damper by means of or through which, in a state connected to the electric motor (20), a rotary movement of the nacelle (4) relative to the supporting structure (3) about the yaw axis (6) can be damped about the yaw axis (6), **characterised by** at least one switching device by means of which the damping member can be separated from the electric motor (20) and can thus be deactivated, where the switching device comprises a clutch (27) which engages automatically when the power supply (38) to the electric motor (20) fails, and by means of which the motor shaft (21) can be mechanically connected to the damper (28) when the power supply (38) fails, the damper being separable from the motor shaft (21) by means of the clutch (27) when the power supply (38) is present.

2. Control device according to Claim 1, **characterised in that** the damper (28) is a hydraulic damper.

3. Control device according to Claim 1 or 2, **characterised in that** the damper (28) is a hydrodynamic clutch or viscous clutch.

4. Control device according to any one of the preceding claims, **characterised in that** the actuator comprises at least one gear system (23) connected to the electric motor (20).

5. Control device according to Claim 4, **characterised in that** the motor shaft (21) is connected between the clutch (27) and the gear system (23).

6. Control device according to Claim 4 or 5, **characterised in that** the motor shaft (21) is connected at its one end to the gearbox (23) and at its other end to the clutch (27).

7. Control device according to any one of the preceding claims, **characterised by** a control device (36) which is electrically connected to the electric motor (20) and by means of which the electric motor (20) can be controlled or regulated.

8. Control device according to Claim 7, **characterised in that** the electric motor (20) can be operated as a damper by means of the control device (36), by means of which a rotation of the nacelle (4) relative to the supporting structure (3) about the yaw axis (6) can be damped.

## Revendications

1. Dispositif de commande pour un système de lacet d'une éolienne, avec au moins un dispositif de réglage branché entre une structure porteuse (3) et un support de machine (4) logé de manière rotative autour d'un axe de lacet (6) sur la structure porteuse (3) et au moins un moteur électrique (20) comprenant un arbre de moteur (21), au moins un organe d'amortissement comprenant un amortisseur passif (28), au moyen duquel ou à l'aide duquel, dans un état relié avec le moteur électrique (20), un mouvement de rotation du support de machine (4) par rapport à la structure porteuse (3) autour de l'axe de lacet (6) peut être amorti, **caractérisé par** au moins un dispositif de commutation au moyen duquel l'organe d'amortissement peut être séparé du moteur électrique (20) et donc désactivé, le dispositif de commutation comprenant un embrayage (27) embrayant automatiquement lors d'une panne de l'alimentation électrique (38) du moteur électrique (20), au moyen duquel l'arbre du moteur (21) peut être relié mécaniquement, lors d'une panne de l'alimentation électrique (38), avec l'amortisseur (28), qui peut être séparé de l'arbre du moteur (21) au moyen de l'embrayage (27) lorsque l'alimentation électrique (38) fonctionne.

2. Dispositif de commande selon la revendication 1, **caractérisé en ce que** l'amortisseur (28) est un amortisseur hydraulique.

3. Dispositif de commande selon la revendication 1 ou 2, **caractérisé en ce que** l'amortisseur (28) est un embrayage hydrodynamique ou un visco-embrayage.

4. Dispositif de commande selon l'une des revendications précédentes, **caractérisé en ce que** le dispositif de réglage comprend au moins une transmission (23) reliée avec le moteur électrique (20).

5. Dispositif de commande selon la revendication 4, **caractérisé en ce que** l'arbre du moteur (21) est branché entre l'embrayage (27) et la transmission (23).

6. Dispositif de commande selon la revendication 4 ou 5, **caractérisé en ce que** l'arbre du moteur (21) est relié, au niveau d'une de ses extrémités, avec la transmission (23) et, au niveau de son autre extrémité, avec l'embrayage (27).

7. Dispositif de commande selon l'une des revendications précédentes, **caractérisé par** un dispositif de commande (36), relié électriquement avec le moteur électrique (20), qui permet de contrôler ou de réguler le moteur électrique (20).

8. Dispositif de commande selon la revendication 7, **caractérisé en ce que** le moteur électrique (20) peut être actionné au moyen du dispositif de commande (36) en tant qu'amortisseur permettant d'amortir une rotation du support de machine (4) par rapport à la structure porteuse (3) autour de l'axe de lacet (6).
